(19) 

Europäisches
Patentamt
European
Patent Office
Office européen
des brevets

(11) **EP 4 761 400 A1**

(12) **EUROPEAN PATENT APPLICATION**
published in accordance with Art. 153(4) EPC

(43) Date of publication:
**17.06.2026 Bulletin 2026/25**

(21) Application number: **24858291.8**

(22) Date of filing: **13.08.2024**

(51) International Patent Classification (IPC):
**H04W 68/02** (2009.01)

(52) Cooperative Patent Classification (CPC):
**H04W 68/02;** Y02D 30/70

(86) International application number:
**PCT/CN2024/111601**

(87) International publication number:
**WO 2025/044748 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 CN 202311129388**

(71) Applicant: **HUAWEI TECHNOLOGIES CO., LTD.
Shenzhen 518129 (CN)**

(72) Inventors:
• **FANG, Songlei
Shenzhen, Guangdong 518129 (CN)**
• **LI, Chenwan
Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND COMMUNICATION APPARATUS**

(57)     This application provides a communication method and a communication apparatus, applicable to scenarios of combination use of a low-power wake-up signal (low-power wake-up signal, LP-WUS) and a paging early indication (paging early indication, PEI), to reduce paging false alarms by monitoring a paging message in a dual-layer grouping manner. In the method, a first wake-up signal is first received by using a first receiver having relatively low operating power, and then a second wake-up signal is received by using a second receiver having relatively high operating power, to monitor paging based on the second wake-up signal. Because a second terminal group indicated by the second wake-up signal and a first terminal group indicated by the first wake-up signal include a terminal device, the first terminal group indicates to wake up a terminal, and then a second paging group indicates to monitor a paging message, so as to monitor the paging message in the dual-layer grouping manner. In this way, a to-be-paged terminal can be indicated at a finer granularity, to reduce a probability that the terminal is paged, and further reduce paging false alarms.

FIG. 6

**Description**

This application claims priority to Chinese Patent Application No. 202311129388.0, filed with the China National Intellectual Property Administration on August 31, 2023 and entitled "COMMUNICATION METHOD AND COMMUNICATION APPARATUS", which is incorporated herein by reference in its entirety.

**TECHNICAL FIELD**

This application relates to the communication field, and in particular, to a communication method and a communication apparatus.

**BACKGROUND**

In a communication system, when a plurality of terminal devices monitor a same paging occasion (paging occasion, PO), if paging is performed only for some of the plurality of terminal devices, for a terminal device that is not paged, unnecessary paging reception exists, resulting in unnecessary power consumption. This case is referred to as a paging false alarm (false alarm).

Currently, a paging early indication (paging early indication, PEI) mechanism may be introduced to a network device and the terminal device, to reduce occurrence of the paging false alarm. The network device may divide the plurality of terminal devices on the same PO into a plurality of groups, and indicate, based on the PEI mechanism, terminal devices in some groups specified in the plurality of groups to monitor a paging message on the PO.

In addition, a terminal device configured with a low-power wake-up signal (low-power wake-up signal, LP-WUS) uses a primary-secondary receive link combination mode. A primary link is in an ultra-deep sleep (Ultra-deep sleep) state before being woken up by the LP-WUS. The LP-WUS signal may be designed to be at a subgroup granularity, to reduce wake-up false alarms.

Therefore, how to monitor a PO by using both the LP-WUS and the PEI mechanism is an urgent technical problem to be resolved.

**SUMMARY**

Embodiments of this application provide a communication method and a communication apparatus, to reduce paging false alarms by monitoring a paging message in a dual-layer grouping manner.

A first aspect of this application provides a communication method. The method is performed by a terminal device, or the method is performed by some components (for example, a processor, a chip, or a chip system) in the terminal device, or the method may be implemented by a logical module or software that can implement all or some functions of the terminal device. The communication method is applied to the terminal device. The terminal device includes a first receiver and a second receiver, and operating power of the first receiver is less than operating power of the second receiver. In the method, a first wake-up signal is first received by using a first receiver, where the first wake-up signal includes first indication information, the first indication information indicates that a first terminal group is woken up, and the first terminal group includes the terminal device (or understood as that a terminal group to which the terminal device having the first receiver belongs is in the first terminal group), and then a second wake-up signal is received by using the second receiver, where the second wake-up signal indicates that a second terminal group receives a paging message, and the second terminal group includes the terminal device (or understood as that the terminal group to which the terminal device having the first receiver belongs is in the second terminal group). Then, a paging message is received based on the second wake- up signal.

According to the foregoing technical solution, the first wake-up signal is first received by using the first receiver having relatively low operating power, and then the second wake-up signal is received by using the second receiver having relatively high operating power, to monitor paging based on the second wake-up signal. Because the second terminal group indicated by the second wake-up signal and the first terminal group indicated by the first wake-up signal include the terminal device, the first terminal group indicates to wake up a terminal, and then a second paging group indicates to monitor the paging message, so as to monitor the paging message in a dual-layer grouping manner. In this way, a communication method applicable to a scenario in which both a low-power wake-up signal and a paging early indication are used is provided. In addition, a to-be-paged terminal can be indicated at a finer granularity, to reduce a probability that the terminal is paged. In addition, in comparison with a case in which the terminal device directly monitors the paging message, the dual-layer grouping manner at a finer granularity can reduce an energy loss caused by unnecessary monitoring paging, to further reduce paging false alarms.

A second aspect of this application provides a communication method. The method is performed by a network device, or the method is performed by some components (for example, a processor, a chip, or a chip system) in the network device, or the method may be implemented by a logical module or software that can implement all or some functions of the network device. In the method, a first wake-up signal is sent, where the first wake-up signal is configured to be received by a first receiver, the first wake-up signal includes first indication information, the first indication information indicates that a first terminal group is woken up, and the first terminal group includes a terminal device; and a second wake-up signal is sent, where the second wake-up signal is configured to be received by a second receiver, operating power of the first receiver is less than operating power of the second receiver, the second wake-up signal indicates a second terminal group to receive a paging message, the second terminal group includes the terminal device, and the terminal device includes the first receiver and the second receiver.

According to the foregoing technical solution, in a manner of first sending the first wake-up signal and then sending the second wake-up signal, the network device may indicate, in a dual-layer grouping manner, the terminal device to monitor a paging message. In this way, a communication method applicable to a scenario in which both a low-power wake-up signal and a paging early indication are used is provided. In addition, a to-be-paged terminal can be indicated at a finer granularity, to reduce a probability that the terminal is paged. In addition, in comparison with a case in which the terminal device is indicated to directly monitor a paging message and directly monitor all PEI single-layer groups, the dual-layer grouping manner at a finer granularity can reduce an energy loss caused by unnecessary monitoring paging, to further reduce paging false alarms.

In a possible implementation of the first aspect or the second aspect, the second terminal group is a subgroup of the first terminal group. Alternatively, it is understood as that a terminal group to which the terminal device having the first receiver belongs is in a large group of the first terminal group, and is also in a small group of the second terminal group.

According to the foregoing technical solution, dual-layer grouping is used, and the dual-layer groups have a belonging relationship, so that a to-be-paged terminal can be indicated at a finer granularity, to reduce a probability that the terminal is paged.

In a possible implementation of the first aspect or the second aspect, the second terminal group includes a third terminal group, the second wake-up signal includes second indication information, the second indication information indicates the third terminal group to receive a paging message, the third terminal group in the second terminal group is a subgroup of the first terminal group, a device in the third terminal device group supports a terminal identifier grouping (UE_ID) manner, and the third terminal group in the second terminal group includes the terminal device. Correspondingly, the foregoing step of receiving the paging message based on the second wake-up signal includes: receiving the paging message based on the second indication information.

In addition, the second indication information may be understood as a newly introduced PEI (referred to as a second PEI in this specification).

According to the foregoing technical solution, the second indication information in the second wake-up signal is used to perform second-layer indication (where first-layer indication is the first indication information) on terminals that support the terminal identifier grouping, so that a to-be-paged terminal can be indicated at a finer granularity, to reduce a probability that the terminal is paged.

In a possible implementation of the first aspect or the second aspect, the second terminal group includes a fourth terminal group, the second wake-up signal includes third indication information, the third indication information indicates the fourth terminal group to receive a paging message, a device in the fourth terminal device group supports a core network grouping manner or a terminal identifier grouping manner, and the fourth terminal group in the second terminal group includes the terminal device. Correspondingly, the foregoing step of receiving the paging message based on the second wake-up signal includes: receiving the paging message based on the third indication information.

In addition, the third indication information may be understood as an existing PEI (referred to as a first PEI in this specification).

According to the foregoing technical solution, an existing PEI mechanism may be compatible. To be specific, the dual-layer grouping newly designed in this application does not affect a solution in which a conventional terminal monitors an existing PEI, so that compatibility of this solution can be improved.

In a possible implementation of the first aspect or the second aspect, the second indication information is in a first field in downlink control information DCI, the DCI further includes a second field, the second field indicates a fifth terminal group to receive a paging message, and a device in the fifth terminal device group supports a core network grouping manner or a terminal identifier grouping manner.

According to the foregoing technical solution, when both the second PEI newly designed in this application and the existing first PEI exist, DCI overheads can be reduced. For example, the second PEI in the newly designed dual-layer grouping may be in a reserved field of DCI corresponding to the existing first PEI, so that one piece of DCI can indicate different PEI mechanisms. In this way, overheads can be reduced, and compatibility of this solution can be improved.

In a possible implementation of the first aspect or the second aspect, a calculation formula of the second indication information is as follows:

$$SubgroupID2 = \left( floor \left( \frac{UE\_ID}{N * N_s * G_1} \right) \bmod G_2 \right)$$

*SubgroupID2* represents a group number of the third terminal group, *floor* represents rounding down, *UE _ ID* represents a terminal identifier of the terminal device, *N* represents a quantity of paging frames in one paging cycle, $N_s$ represents a quantity of paging occasions in one paging frame, $G_1$ represents a quantity of groups of the first terminal group on one paging occasion, and $G_2$ represents a quantity of groups of the third terminal group on one paging occasion.

Optionally, the parameters in the foregoing calculation formula may be notified by the network device to the terminal device in a configuration, preconfiguration, or broadcast manner.

According to the foregoing technical solution, a manner of calculating a group number of the second PEI in the dual-layer grouping is provided, to improve accuracy of determining the group number by the terminal device.

In a possible implementation of the first aspect or the second aspect, the first indication information is a low-power wake-up signal LP-WUS, and the second indication information is a paging early indication PEI.

According to the foregoing technical solution, a communication method applicable to a scenario in which both the low-power wake-up signal and the paging early indication are used is provided.

A third aspect of this application provides a communication apparatus. The apparatus may implement the method according to any one of the first aspect or the possible implementations of the first aspect. The apparatus includes a corresponding unit or module configured to perform the foregoing method. The unit or module included in the apparatus may be implemented by software and/or hardware. For example, the apparatus may be a terminal device, or the apparatus may be a component (for example, a processor, a chip, or a chip system) in the terminal device, or the apparatus may be a logical module or software that can implement all or some functions of the terminal device. In the third aspect and possible implementations of the third aspect, an example in which the communication apparatus is a terminal device is used for description.

The apparatus includes a transceiver unit. The transceiver unit is configured to: receive a first wake-up signal by using a first receiver, where the first wake-up signal includes first indication information, the first indication information indicates that a first terminal group is woken up, and the first terminal group includes the terminal device. The transceiver unit is further configured to: receive a second wake-up signal by using a second receiver, where the second wake-up signal indicates a second terminal group to receive a paging message, and the second terminal group includes the terminal device. The transceiver unit is further configured to: receive a paging message based on the second wake-up signal.

Optionally, the apparatus may further include a processing unit. The processing unit is configured to: receive a paging message based on the second wake-up signal. Alternatively, the transceiver unit cooperates with the processing unit to receive the paging message based on the second wake-up signal.

A fourth aspect of this application provides a communication apparatus. The apparatus may implement the method according to any one of the first aspect or the possible implementations of the first aspect. The apparatus includes a corresponding unit or module configured to perform the foregoing method. The unit or module included in the apparatus may be implemented by software and/or hardware. For example, the apparatus may be a network device, or the apparatus may be a component (for example, a processor, a chip, or a chip system) in the network device, or the apparatus may be a logical module or software that can implement all or some functions of the network device. In the third aspect and possible implementations of the third aspect, an example in which the communication apparatus is a network device is used for description.

The apparatus includes a transceiver unit. The transceiver unit is configured to send a first wake-up signal, where the first wake-up signal is configured to be received by a first receiver, the first wake-up signal includes first indication information, the first indication information indicates that a first terminal group is woken up, and the first terminal group includes a terminal device. The transceiver unit is further configured to send a second wake-up signal, where the second wake-up signal is configured to be received by a second receiver, operating power of the first receiver is less than operating power of the second receiver, the second wake-up signal indicates a second terminal group to receive a paging message, the second terminal group includes the terminal device, and the terminal device includes the first receiver and the second receiver, and the terminal device includes the first receiver and the second receiver.

In a possible implementation of the third aspect or the fourth aspect, the second terminal group is a subgroup of the first terminal group.

In a possible implementation of the third aspect, the second terminal group includes a third terminal group, the second wake-up signal includes second indication information, the second indication information indicates the third terminal group to receive a paging message, the third terminal group in the second terminal group is a subgroup of the first terminal group, a device in the third terminal device group supports a terminal identifier grouping manner, and the third terminal group in the second terminal group includes the terminal device.

In a possible implementation of the third aspect or the fourth aspect, the second terminal group includes a fourth terminal group, the second wake-up signal includes third indication information, the third indication information indicates the fourth terminal group to receive a paging message, a device in the fourth terminal device group supports a core network grouping manner or a terminal identifier grouping manner, and the fourth terminal group in the second terminal group includes the terminal device.

In a possible implementation of the third aspect or the fourth aspect, the second indication information is in a first field in downlink control information DCI, the DCI further includes a second field, the second field indicates a fifth terminal group to receive a paging message, and a device in the fifth terminal device group supports a core network grouping manner or a terminal identifier grouping manner.

In a possible implementation of the third aspect or the fourth aspect, a calculation formula of the second indication information is as follows:

$$SubgroupID2 = \left( floor\left( \frac{UE\_ID}{N * N_s * G_1} \right) \bmod G_2 \right)$$

*SubgroupID2* represents a group number of the third terminal group, *floor* represents rounding down, *UE_ID* represents a terminal identifier of the terminal device, *N* represents a quantity of paging frames in one paging cycle, $N_s$ represents a quantity of paging occasions in one paging frame, $G_1$ represents a quantity of groups of the first terminal group on one paging occasion, and $G_2$ represents a quantity of groups of the third terminal group on one paging occasion.

In a possible implementation of the third aspect or the fourth aspect, the first indication information is a low-power wake-up signal LP-WUS, and the second indication information is a paging early indication PEI.

A fifth aspect of embodiments of this application provides a communication apparatus, including at least one processor. The at least one processor is coupled to a memory. The memory is configured to store a program or instructions. The at least one processor is configured to execute the program or the instructions, to cause the method according to any one of the possible implementations of the first aspect to be implemented.

A sixth aspect of embodiments of this application provides a communication apparatus, including at least one processor. The at least one processor is coupled to a memory. The memory is configured to store a program or instructions. The at least one processor is configured to execute the program or the instructions, to cause the method according to any one of the possible implementations of the second aspect to be implemented.

A seventh aspect of embodiments of this application provides a communication apparatus, including at least one logic circuit and an input/output interface. The logic circuit and the input/output interface are configured to perform the method according to any one of the possible implementations of the first aspect.

An eighth aspect of embodiments of this application provides a communication apparatus, including at least one logic circuit and an input/output interface. The logic circuit and the input/output interface are configured to perform the method according to any one of the possible implementations of the second aspect.

A ninth aspect of embodiments of this application provides a communication apparatus. The communication apparatus includes at least one processor, configured to implement functions in the method according to any one of the possible implementations of the first aspect. The communication apparatus may further include a memory. The memory is configured to store program instructions and data that are necessary for the communication apparatus. Optionally, the communication apparatus further includes an interface circuit. The communication apparatus provides program instructions and/or data for the at least one processor.

A tenth aspect of embodiments of this application provides a communication apparatus. The communication apparatus includes at least one processor, configured to implement functions in the method according to any one of the possible implementations of the first aspect. The communication apparatus may further include a memory. The memory is configured to store program instructions and data that are necessary for the communication apparatus. Optionally, the communication apparatus further includes an interface circuit. The communication apparatus provides program instructions and/or data for the at least one processor.

The communication apparatus according to the fifth aspect to the tenth aspect of embodiments of this application may be a terminal device or a network device, or may be a chip or a chip system in the terminal device or the network device. The chip system may include a chip, or may include a chip and another discrete component.

An eleventh aspect of embodiment of this application provides a computer-readable storage medium storing one or more computer-executable instructions. When the computer-executable instructions are executed by a processor, the processor performs the method according to any one of the possible implementations of either of the first aspect and the second aspect.

A twelfth aspect of embodiments of this application provides a computer program product (or referred to as a computer program). When the computer program product is executed by a processor, the processor performs the method according to any one of the possible implementations of either of the first aspect and the second aspect.

A thirteenth aspect of embodiments of this application provides a communication system. The communication system includes the terminal device in the first aspect and the network device in the second aspect. Alternatively, the communication system includes the communication apparatus in the fifth aspect and the communication apparatus in the sixth aspect. Alternatively, the communication system includes the communication apparatus in the seventh aspect and the communication apparatus in the eighth aspect. Alternatively, the communication system includes the communication apparatus in the ninth aspect and the communication apparatus in the tenth aspect.

For technical effects brought by any design manner in the second aspect to the thirteenth aspect, refer to technical effects brought by different design manners in the first aspect. Details are not described herein again.

## BRIEF DESCRIPTION OF DRAWINGS

FIG. 1a is a diagram of a communication scenario according to this application;
FIG. 1b is another diagram of a communication scenario according to this application;
FIG. 1c is another diagram of a communication scenario according to this application;
FIG. 1d is another diagram of a communication scenario according to this application;
FIG. 2 is a diagram of a paging mechanism according to this application;
FIG. 3a is a schematic flowchart of communication in a grouping manner according to this application;
FIG. 3b is a schematic flowchart of communication in another grouping manner according to this application;
FIG. 4a is a diagram of DCI according to this application;
FIG. 4b is a diagram of a PEI according to this application;
FIG. 5 is a diagram of an architecture of a receiver in an LP-WUS configuration according to this application;
FIG. 6 is a schematic flowchart of a communication method according to this application;
FIG. 7 is a diagram of dual-layer grouping according to this application;
FIG. 8 is another diagram of DCI according to this application;
FIG. 9 is another schematic flowchart of a communication method according to this application;
FIG. 10 is a diagram of a communication apparatus according to this application;
FIG. 11 is another diagram of a communication apparatus according to this application;
FIG. 12 is another diagram of a communication apparatus according to this application;
FIG. 13 is another diagram of a communication apparatus according to this application; and
FIG. 14 is another diagram of a communication apparatus according to this application.

## DESCRIPTION OF EMBODIMENTS

The following clearly and completely describes technical solutions in embodiments of this application with reference to the accompanying drawings in embodiments of this application.

First, some terms in embodiments of this application are described for ease of understanding by a person skilled in the art.

1. Terminal device

The terminal device may be a wireless terminal device that can receive scheduling and indication information of a network device. The wireless terminal device may be a device that provides voice and/or data connectivity for a user, a handheld device having a wireless connection function, or another processing device connected to a wireless modem.

The terminal device may communicate with one or more core networks or the Internet via a radio access network (radio access network, RAN). The terminal device may be a mobile terminal device, for example, a cell phone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station (subscriber station, SS), a customer premises equipment (customer premises equipment, CPE), a terminal (terminal), a user equipment (user equipment, UE), a mobile terminal (mobile terminal, MT), or the like. The terminal device may alternatively be a wearable device and a terminal device in a next-generation communication system, for example, a terminal device in 5G communication system or a terminal device in a future evolved public land mobile network (public land mobile network, PLMN).

2. Network device

The network device may be a device in a wireless network. For example, the network device may be a radio access network (radio access network, RAN) node (or device) that connects a terminal device to the wireless network, and may also be referred to as a base station. Currently, some examples of a RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

The network device can send configuration information (for example, carried in a scheduling message and/or an indication message) to the terminal device. The terminal device further performs network configuration based on the configuration information, so that the network configurations of the network device and the terminal device are aligned. Alternatively, through a network configuration preset in the network device and a network configuration preset in the terminal device, the network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

3. Radio resource control (radio resource control, RRC) state

A terminal device has at least three RRC states: an RRC connected state (connected state), an RRC idle state (idle state), and an inactive state (inactive state).

The RRC connected state is a state in which the terminal device establishes an RRC connection to a network, and may perform data transmission. The RRC connected state may also be referred to as a connected state for short. In this specification, the "connected state" and the "RRC connected state" are a same concept, and the two names may be interchanged.

The RRC idle state is a state in which the terminal device does not establish an RRC connection to the network, and a base station does not store a context of the terminal device. If the terminal device needs to enter the RRC connected state from the RRC idle state, the terminal device needs to initiate an RRC connection establishment process. The RRC idle state may also be referred to as an idle state for short. In this specification, the "idle state" and the "RRC idle state" are a same concept, and the two names may be interchanged.

The RRC inactive state is a state in which the terminal device previously enters the RRC connected state, and then the base station releases an RRC connection, but the base station stores the context of the terminal device. If the terminal device needs to transit from the RRC inactive state to the RRC connected state again, the terminal device needs to initiate an RRC resume process (or referred to as an RRC connection resume process). In comparison with the RRC establishment process, the RRC resume process has a shorter delay and lower signaling overheads. However, the base station needs to store the context of the terminal device, resulting in storage overheads of the base station. The RRC inactive state may also be referred to as an inactive state for short. In this specification, a "non-active state", a "deactivated state", the "inactive state", the "RRC inactive state", and an "RRC deactivated state" are a same concept, and the names may be interchanged.

4. Paging (paging)

The paging is a process in which a network side device periodically sends a paging message (paging message) to terminals in an idle state and terminals in an inactive state, to wake up the terminals in the idle state or the terminals in the inactive state to back to a connected (connected) state. In a possible design, the process includes: The network side device (for example, an access network device) may calculate a paging occasion (paging occasion, PO) corresponding to a terminal, where the PO periodically appears, and a cycle in which a PO of the terminal appears is referred to as a paging cycle. When the network side device needs to page the terminal, the network side device sends, to the terminal on the PO of the terminal, a physical downlink control channel (physical downlink control channel, PDCCH) carrying paging downlink control information (downlink control information, DCI). The paging DCI may indicate whether the paging DCI schedules a physical downlink shared channel (physical downlink control channel, PDSCH) carrying a paging message. In embodiments of this application, the PDSCH carrying a paging message may be referred to as a paging PDSCH.
Further, if the paging DCI indicates that the PDSCH carrying a paging message is scheduled, the network side device sends, at a resource position indicated by the paging DCI, the PDSCH carrying a paging message. Correspondingly, a terminal side device (for example, the terminal) may periodically monitor the paging DCI on a PO corresponding to the terminal side device. If the paging DCI is received by the terminal side device and the paging DCI schedules the paging PDSCH, the terminal side device receives, based on the received paging DCI, the PDSCH carrying a paging message, and determines, based on the PDSCH carrying a paging message, whether the terminal side device is paged. If the terminal is paged, the terminal initiates a random access procedure, and switches to a connected (connected) state.
In addition, the paging supports discontinuous reception (discontinuous reception, DRX). In this way, the terminal device may wake up only in fixed time to receive a paging message, and may sleep in another time to reduce power consumption and prolong battery use time. For example, a cycle of each wake-up is a DRX cycle. One DRX cycle includes one or more paging frames (paging frames, PFs), one PF corresponds to one or more POs, and one terminal device needs to receive a paging message on a PO.
It should be understood that the terminal device in embodiments of this application is a terminal device in an idle state or an inactive state.

5. Paging occasion (paging occasion, PO)

The paging occasion is a time domain position/time interval in which a terminal monitors paging DCI. When determining a position of the PO, a position of a paging frame (paging frame, PF) is first determined, and then a final position of the PO is determined based on a relative position of the PO in the PF. One PF may be associated with one or more POs. POs in one PF are consecutively arranged starting from a start position of the PF. For example, a start position of the 1st PO in the PF is the same as a start position of the PF, and a start position of the 2nd PO overlaps an end position of the 1st PO. By analogy, a plurality of POs are configured. A length of a PO may be one or more slots (slots).

6. Configuration and preconfiguration

In this application, both the configuration and the preconfiguration are used. The configuration means that a network device/a server sends configuration information of some parameters or values of parameters to a terminal via a message or signaling, so that the terminal determines, based on the values or the information, a communication parameter or a resource used during transmission. Similar to the configuration, the preconfiguration may be parameter information or a parameter value negotiated by a network device/a server with a terminal device in advance, or may be parameter information or a parameter value used by a base station/a network device or a terminal device as specified in a standard protocol, or may be parameter information or a parameter value pre-stored in a base station/a server or a terminal device. This is not limited in this application.
Further, these values and parameters may be changed or updated.

7. Receive

Receiving a signal in embodiments of this application may also be understood as detecting a signal, monitoring a signal, or the like. This is not specifically limited herein. For example, receiving DCI typically means monitoring DCI.
8. Terms "system" and "network" are interchangeably used in embodiments of this application. "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and (or) C" may represent A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

In this application, unless otherwise specified, mutual reference may be made between same or similar parts of various embodiments. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

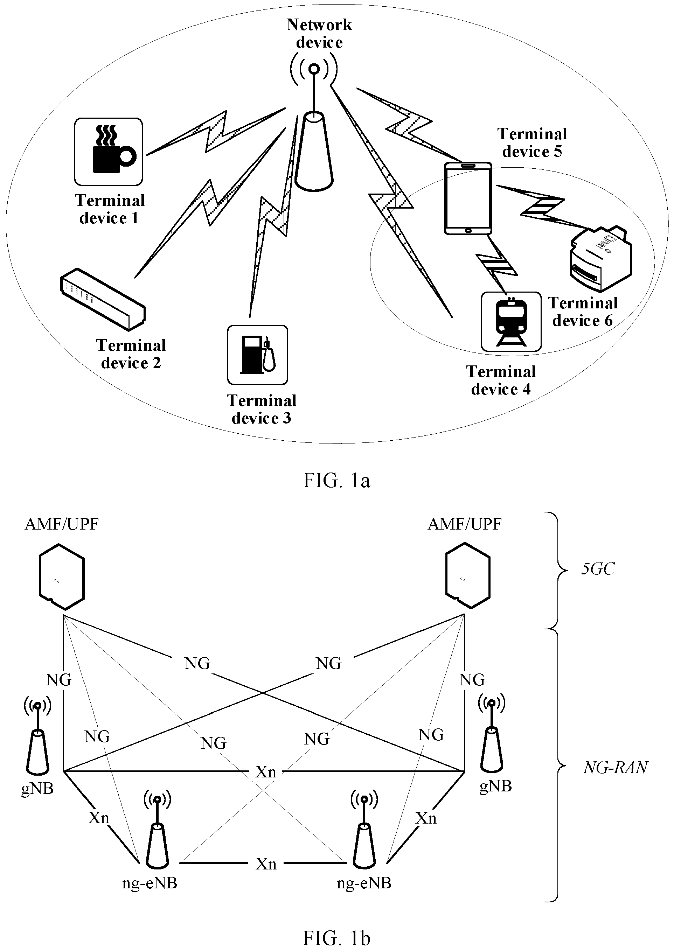

FIG. 1a is a diagram of a communication system according to this application. FIG. 1a shows an example of one network device and six terminal devices. The six terminal devices are a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1a, in a communication process, a signal sending device (or referred to as a transmit end or a transmit-end device) may be the network device, and a signal receiving device (or referred to as a receive end or a receive-end device) may be the terminal device; or the signal sending device may be the terminal device, and the signal receiving device may be the network device; or both the signal sending device and the signal receiving device may be the network device; or both the signal sending device and the signal receiving device may be the terminal device.

This application may be applied to a long term evolution (long term evolution, LTE) system, a new radio (new radio, NR) system, or a communication system (for example, 6G) evolved after 5G. The communication system includes at least one network device and/or at least one terminal device.

In an implementation example, FIG. 1b is a diagram of an architecture of a 5G NR system. A 5G core network (5G core network, 5GC) may include network elements such as an access and mobility management function (access and mobility management function, AMF) and a user plane function (user plane function, UPF). A 5G radio access network (NG-RAN) may include network elements such as a 5G access network (denoted as a gNB) and a 4G access network (denoted as an ng-eNB) connected to the 5GC.

Optionally, in the example shown in FIG. 1b, a serving base station gNB of the terminal device is responsible for providing a user plane and control plane protocol function of 5G NR for the terminal device, and a serving base station ng-eNB of the terminal device is responsible for providing a user plane and control plane protocol function of 4G E-UTRA for the terminal device.

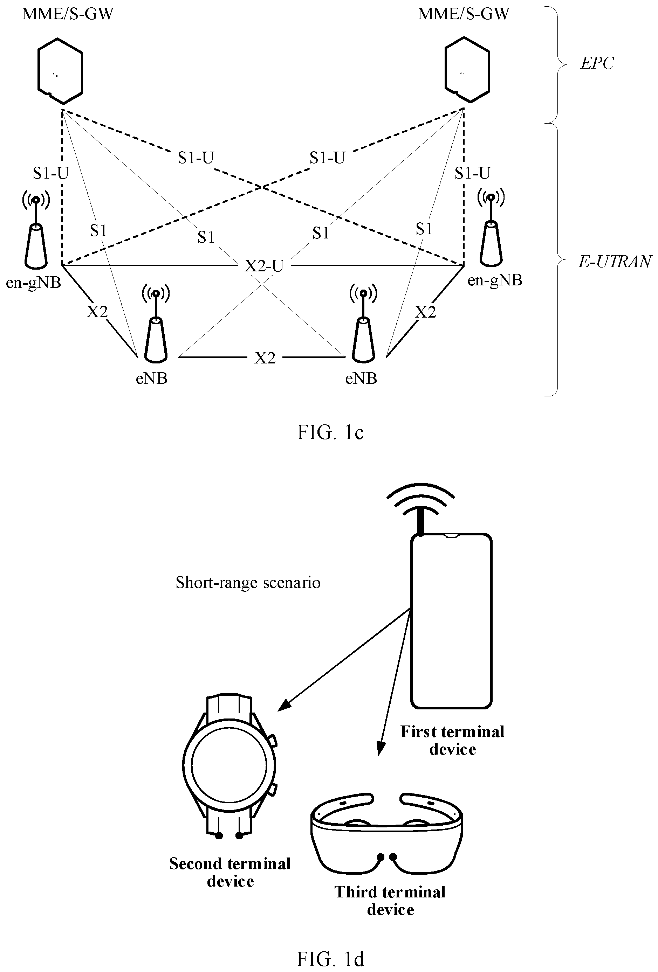

In another implementation example, FIG. 1c is a diagram of an architecture of an LTE system. A 4G core network may be an evolved packet core (evolved packet core, EPC), and includes network elements such as a mobility management entity (mobility management entity, MME) and a serving gateway (serving gateway, S-GW). A 4G radio access network may be an E-UTRAN, and may include network elements such as a 4G base station (denoted as an eNB) and a 5G base station (denoted as an en-gNB) connected to the EPC.

Optionally, in the example shown in FIG. 1c, a serving base station eNB of the terminal device is responsible for providing a user plane and control plane protocol function of LTE for a UE, and a serving base station en-gNB of the terminal device is responsible for providing a user plane and control plane protocol function of 5G NR for the terminal device.

It may be understood that FIG. 1a to FIG. 1c are merely examples of the communication system, and in actual application, the communication method provided in this application may be further applied to a short-distance scenario shown in FIG. 1d. For example, a first terminal device functions as the network device, and a second terminal device and a third terminal device function as the terminal device. This is not specifically limited herein.

In any implementation example shown in FIG. 1a to FIG. 1d, the network device sends paging to the terminal device based on a PDSCH resource position, and the terminal device periodically wakes up to monitor a PDCCH channel, and then parses DCI, to further obtain a time-frequency position of the PDSCH channel. Finally, the terminal device parses content of the paging at the position corresponding to the PDSCH channel.

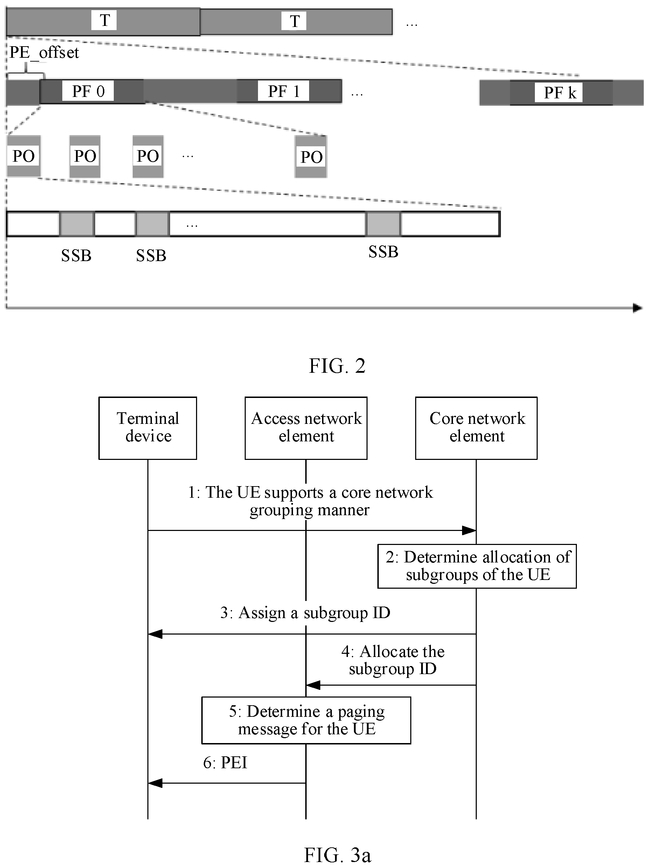

The terminal device periodically wakes up to monitor the PDCCH channel, to be specific, receives a paging message (paging message) only at a fixed time-frequency domain position. As shown in FIG. 2, these fixed time-frequency domain positions are referred to as paging occasions POs, and a radio frame that these POs are in is referred to as a paging frame PF. T represents a paging cycle. One paging cycle includes N PFs. One PF includes Ns POs. The PO may also be referred to as one set of PDCCH monitoring occasions (PMO). The PO includes a plurality of slots, and one PO includes S SSB beams (where S is determined based on ssb-PositionsInBurst in a system information block 1 message). Optionally, a maximum quantity of paging UEs supported by one PO is 32. Paging messages sent on the SSB beams are the same.

Optionally, an example in which terminal identifier information is UE_ID is used. The terminal device may obtain, through calculation, a system frame number (system frame number, SFN) of a PF by using Formula 1 below, and obtain, through calculation, a sequence number i_s of a PO that needs to be monitored by the terminal device by using Formula 2 below. After the system frame number of the PF and the index of the PO are obtained through calculation, the terminal device may successfully locate a PO corresponding to the terminal device.

$$\text{Formula 1: } (SFN+PF\_offset) \bmod T = (T \text{ div } N)*(UE\_ID \bmod N)$$

$$\text{Formula 2: } i\_s = floor(UE\_ID/N) \bmod Ns$$

(SFN+PF_offset)mod T=(T div N)*(UE_ID mod N) represents that all terminal devices are divided into N groups based on UE_ID, and a specific group that the terminal device is in and a specific corresponding PF may be determined based on a value of UE_ID mod N. floor(UE_ID/N)mod Ns is equivalent to further dividing terminals corresponding to one PF into Ns groups. A specific group, that is, a specific PO, corresponding to the terminal device may be determined based on a value of floor(UE_ID/N)mod Ns. In addition, PF_offset is for determining an offset value of a PF. PF_offset may be pre-specified in a protocol, or may be determined by an access network device and configured for the terminal device. T is a discontinuous reception (discontinuous reception, DRX) cycle, and may also be referred to as a paging cycle. N is a quantity of PFs in a DRX cycle T. Ns is a quantity of POs in one PF. "mod" represents a remainder obtained after a division operation is performed on two numbers before and after mod. floor() means rounding down. "*" means multiplication calculation. "div" means division calculation. A value of UE_ID may be 5G-S temporary mobile subscriber identity (5G-S-temporary mobile subscriber identity, 5G-S-TMSI) mod 1024, 5G-S-TMSI mod 4096, or the like of a terminal.

It should be understood that, in this embodiment of this application, the DRX cycle T, the quantity N of PFs in the DRX cycle, and the quantity Ns of POs in one PF may be dynamically configured based on needs or may be pre-specified in a protocol. This is not limited herein.

In a paging process, when a plurality of terminal devices monitor a same PO, if paging is performed only for some of the plurality of terminal devices, for a terminal device that is not paged, unnecessary paging reception exists, resulting in unnecessary power consumption. This case is referred to as a paging false alarm (false alarm).

It can be learned from the foregoing implementation examples of the paging process that one of main reasons for generating the paging false alarm is that the plurality of terminal devices monitor the same PO. According to a calculation formula specified in a protocol, although 5G-S-TMSIs allocated to one core network may be different but have the same UE_ID (that is, 5G-S-TMSI mod 1024). It can be learned from the foregoing manner of determining the PF and the PO that PO positions calculated by different terminal devices may be the same. In addition, in a paging mechanism, the terminal device obtains scheduling information of a paging message when receiving paging DCI, but cannot learn whether the current paging message is a paging message for the terminal device. Therefore, the terminal device can only determine, based on terminal device identifier information in the paging message after subsequently receiving and decoding the paging message on a PDSCH, whether the current paging is for the terminal device. Therefore, when the plurality of terminal devices monitor the same PO, if paging is performed only for some of the terminal devices, for a terminal device that is actually not paged, unnecessary paging reception exists, resulting in unnecessary power consumption of the terminal device.

Currently, a paging early indication (paging early indication, PEI) mechanism may be introduced to the network device and the terminal device, to reduce occurrence of the paging false alarm. The network device may divide the plurality of terminal devices on the same PO into a plurality of groups, and indicate, based on the PEI mechanism, that terminal devices in some groups specified in the plurality of groups need to monitor a paging message on the PO. A basic idea of the mechanism is to divide terminal devices that monitor a same PO (in other words, divide terminal devices on a same PO into different groups). When the network device performs paging, a PEI indicates a quantity of POs on which the current paging is performed and indicates that terminal devices are divided into different terminal device subgroups on each PO. In this way, before receiving a paging PDCCH and a paging PDSCH (a paging message), the terminal device can learn whether paging needs to be received this time, to reduce a probability that the terminal device receives and decodes paging unnecessarily, and further reduce power consumption generated when the terminal device receives and decodes a paging PDCCH and a paging PDSCH (a paging message) that are not for the terminal device.

In addition, a grouping manner in the PEI includes a core network (Core Network, CN) grouping manner and a terminal identifier (UE_ID) grouping manner. There may be a maximum of eight CN groups and eight UE_ID groups, or a total quantity of CN groups and UE_ID groups is eight. An example in which the terminal device is a UE and the network device is a base station (gNB) is used. If a CN subgroup ID is allocated to the UE, and the gNB supports a CN grouping manner, the CN grouping manner is used. If a CN subgroup ID is not allocated to the UE, or the gNB does not support the CN grouping manner, the UE_ID grouping manner is considered. A UE capability in the CN grouping manner is a non-access stratum (Non-access Stratum, NAS) capability, and a UE capability in the UE_ID grouping manner is an access stratum (Access Stratum, AS) capability.

For example, the CN grouping manner is shown in FIG. 3a. This example relates to interaction between a terminal device, an access network element, and a core network element. The following uses only an example in which the terminal device is a UE, the access network element is a gNB, and the core network element is an AMF. The following describes Step 1 to Step 6 included in a process corresponding to FIG. 3a.

1: The UE notifies the AMF that the UE supports the core network grouping manner. To be specific, the UE indicates, via NAS signaling, that the UE supports a subgroup controlled by a CN.

2: The AMF determines allocation of subgroups of the UE. To be specific, if the UE supports the subgroup controlled by the CN, the AMF determines allocation of subgroup IDs of the UE.

3: The AMF assigns a subgroup ID to the UE. To be specific, the AMF sends the subgroup ID to the UE via NAS signaling.

4: The AMF allocates the subgroup ID to the gNB. To be specific, the AMF notifies the gNB of the subgroup ID allocated by the CN for paging the UE in an idle state or an inactive state.

5: The gNB determines a paging message for the UE. To be specific, when the paging message of the UE is received from the CN or generated by the gNB, the gNB determines a PO and an associated PEI occasion that are for the UE.

6: The gNB sends a PEI to the UE. To be specific, before paging the UE on the PO, the gNB transmits an associated PEI, and indicates, in the PEI, a CN control subgroup corresponding to a to-be-paged UE.

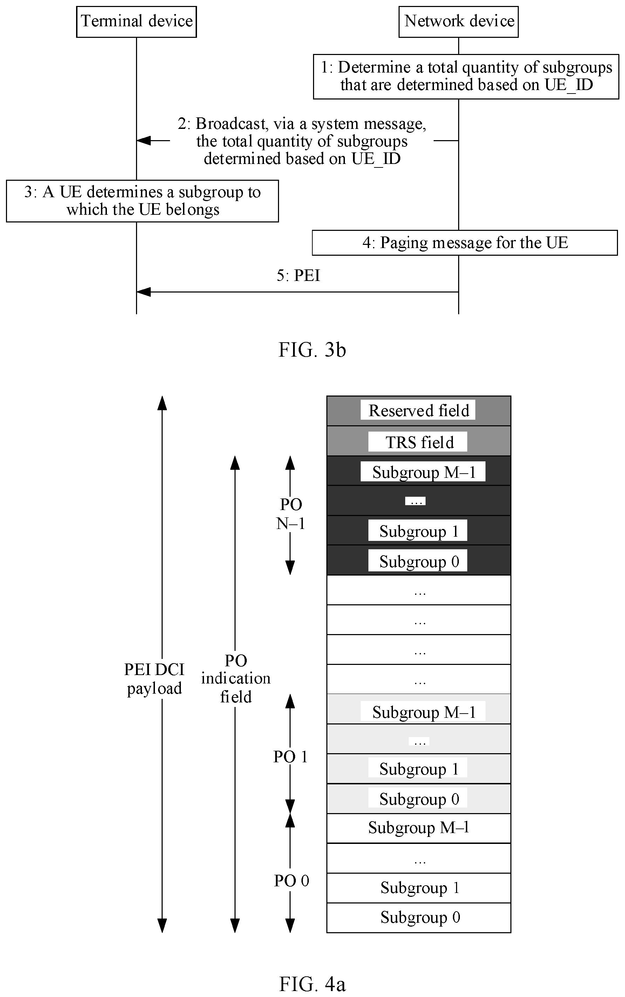

For example, the UE_ID grouping manner is shown in FIG. 3b. This example relates to interaction between a terminal device and a network device. The following uses only an example in which the terminal device is a UE and the network device is a gNB. The following describes Step 1 to Step 5 included in a process corresponding to FIG. 3b.

1: The gNB determines a total quantity of subgroups that are in a cell and that are based on UE_ID.

2: The gNB broadcasts the total quantity of subgroups that are in the cell and that are based on UE_ID.

3: The UE determines a subgroup which the UE belongs in the cell according to Formula 3.

$$\text{SubgroupID} = (\text{floor}(\text{UE\_ID}/(N*Ns))\,\text{mod}\,\text{subgroupsNumForUEID}) + (\text{subgroupsNumPerPO} - \text{subgroupsNumForUEID})$$

Formula 3:

floor represents rounding down. UE_ID represents an identifier of the UE. N represents a quantity of paging frames in one paging cycle. Ns represents a quantity of paging occasions in one paging frame, SubgroupsNumForUEID represents a quantity of subgroups obtained through division based on a UE ID. subgroupsNumPerPO represents a total quantity of subgroups on one PO.

4: When the gNB receives, from a CN, a paging message for a UE supporting a PEI or the paging message is generated by the gNB, the gNB determines a PO and an associated PEI occasion that are for the UE.

5: Before paging the UE on the PO, the gNB transmits an associated PEI and indicates a corresponding subgroup derived from a UE ID that is of a paged UE and that is in the PEI.

Optionally, the PEI indicates the terminal device by using a format (DCI format 2_7) PDCCH. A PEI DCI payload (payload) is shown in FIG. 4a. The PEI DCI payload includes a paging indication field (Paging indication field), a tracking reference signal (tracking reference signal, TRS) field, and a reserved field (Reserved bits). A total quantity of bits of the paging indication field (which may also be referred to as a PO indication field) is equal to M (a quantity of subgroups on one PO) multiplied by N (a quantity of POs in one PEI). Generally, if an identifier bit is "1", it indicates that a terminal belonging to this subgroup needs to wake up to monitor a paging message. Otherwise, if the identifier bit is "0", it indicates that a terminal belonging to this subgroup does not need to wake up to monitor a paging message. The TRS field indicate a bit of an auxiliary TRS, and a total quantity of bits is one to six. Because this is irrelevant to this embodiment of this application, details are not described herein. The reserved field may be used for bits of other function.

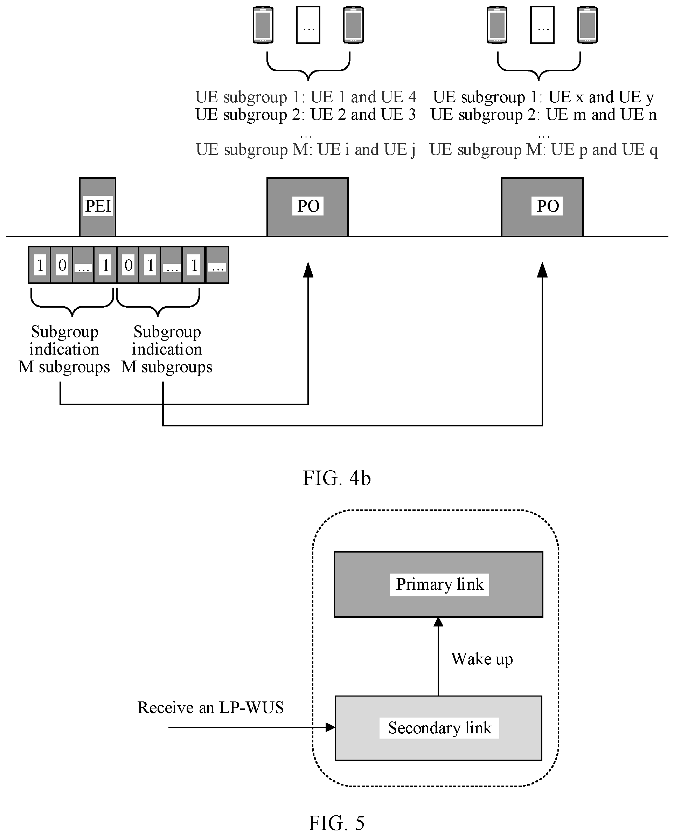

For example, the PEI can indicate several subsequent POs and indicate whether a terminal device subgroup on each PO needs to monitor the paging PDCCH and the paging PDSCH (the paging message). An implementation example is shown in FIG. 4b. A terminal device 1 (denoted as UE 1 in the figure) and a terminal device 4 (denoted as UE 4 in the figure) are a terminal device subgroup 1 on a first PO. A first subgroup in M subgroups to which the first PO belongs is indicated by the PEI as "1", indicating that the terminal device 1 and the terminal device 4 need to monitor the PDCCH at a position of the first PO, and after paging DCI is decoded, decode the PDSCH (paging message) based on scheduling information indicated by the paging DCI. A terminal device 2 (denoted as UE 2 in the figure) and a terminal device 3 (denoted as UE 3 in the figure) are a terminal device subgroup 2 on the first PO. A first subgroup in M subgroups to which the first PO belongs is indicated by the PEI as "0", indicating that the terminal device 2 and the terminal device 3 do not need to monitor the PDCCH at the position of the first PO.

In addition, a terminal device configured with a low-power wake-up signal (low-power wake-up signal, LP-WUS) uses a primary-secondary receive link combination mode (as shown in FIG. 5). A primary link is in an ultra-deep sleep (Ultra-deep sleep) state before being woken up by the low-power wake-up signal (LP-WUS).

The LP-WUS may alternatively be designed to be at a subgroup granularity to reduce wake-up false alarms. Therefore, how to monitor a PO by using both the LP-WUS and the PEI mechanism is an urgent technical problem to be resolved.

To resolve the foregoing technical problem, embodiments of this application provide a communication method and a related apparatus. A first wake-up signal is first received by using a first receiver having relatively low operating power, and then a second wake-up signal is received by using a second receiver having relatively high operating power, to monitor paging based on the second wake-up signal. Because a second terminal group indicated by the second wake-up signal and a first terminal group indicated by the first wake-up signal include a terminal device, the first terminal group indicates to wake up a terminal, and then a second paging group indicates to monitor a paging message, so as to monitor the paging message in a dual-layer grouping manner. In this way, a communication method applicable to a scenario in which both a low-power wake-up signal and a paging early indication are used is provided. In addition, a to-be-paged terminal can be indicated at a finer granularity, to reduce a probability that the terminal is paged. In addition, in comparison with a case in which the terminal device directly monitors the paging message, the dual-layer grouping manner at a finer granularity can reduce an energy loss caused by unnecessary monitoring paging, to further reduce paging false alarms. The following provides further descriptions with reference to the accompanying drawings.

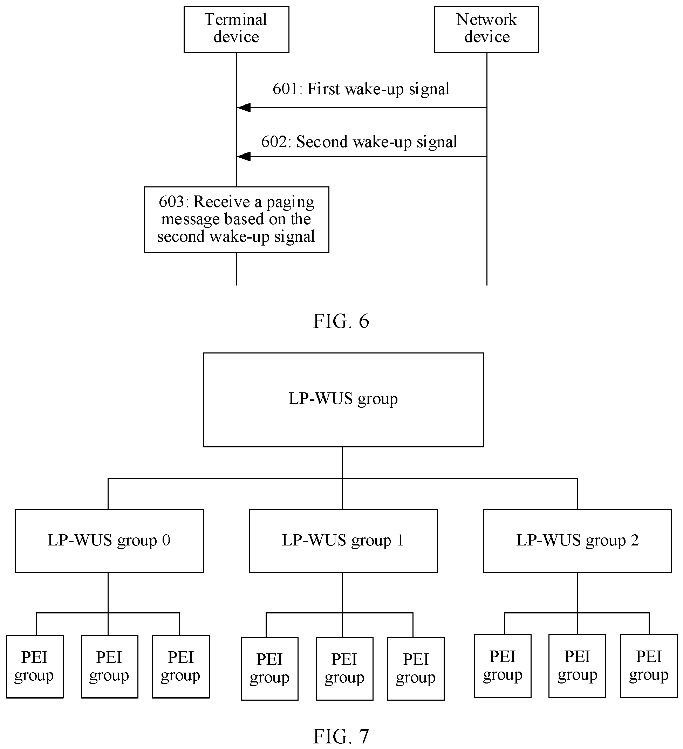

FIG. 6 is a schematic flowchart of a communication method according to this application. The method may include step 601 to step 603. The following describes step 601 to step 603 in detail. Step 601 to step 603 may be performed by a terminal device or a network device, or may be performed by some components (for example, a processor, a chip, or a chip system) in the terminal device or the network device, or may be implemented by a logical module or software that can implement all or some functions of the terminal device. The following uses an example in which the terminal device or the network device performs the steps for description. Processing performed by a single execution entity in step 601 to step 603 may alternatively be performed by a plurality of execution entities. These execution entities may be logically and/or physically separated. For example, processing performed by the network device may be performed by at least one of a CU, a DU, and an RU.

Step 601: The network device sends a first wake-up signal to the terminal device.

The terminal device in this application includes a first receiver and a second receiver, and operating power of the first receiver is less than operating power of the second receiver.

The first receiver may also be referred to as a secondary link receiver or a low-power receiver (low-power receiver, LR), and the second receiver may also be referred to as a main link receiver (main receiver, MR) or a high-power receiver.

The network device sends the first wake-up signal to the terminal device. Correspondingly, the terminal device receives, by using the first receiver, the first wake-up signal sent by the network device. The first wake-up signal includes first indication information. The first indication information indicates that a first terminal group is woken up.

The foregoing may also be understood as that the first indication information indicates which terminals in specific groups are woken up or the first indication information indicates which terminals in specific groups need to monitor a PEI. The first receiver receives the first wake-up signal through detection. If the first terminal group includes a terminal device to which the first receiver belongs (which is understood as that the first indication information indicates that the terminal device is woken up or is understood as that a group number of a terminal group to which a terminal device having the first receiver belongs is in the first terminal group), the second receiver is woken up, so that data is sent and received by the second receiver having higher operating power. The second receiver is in an ultra-deep sleep state (ultra-deep sleep) before being woken up.

For example, a group whose identifier bit is "1" in the first indication information indicates that a terminal device belonging to this group needs to be woken up. A group whose identifier bit is "0" in the first indication information indicates that a terminal device belonging to this group does not need to be woken up. Alternatively, it is understood as that the first receiver needs to determine whether a group whose identifier bit is "1" in the first indication information includes the terminal device to which the first receiver belongs. If the group whose identifier bit is "1" in the first indication information includes the terminal device to which the first receiver belongs, the second receiver is woken up to monitor the PEI. If the group whose identifier bit is "1" in the first indication information does not include the terminal device to which the first receiver belongs, the second receiver continues to maintain the sleep state.

In addition, a grouping manner for the first terminal group may be the UE_ID grouping manner or the CN grouping manner mentioned above. For example, if the terminal device supports the CN grouping manner, an AMF determines a subgroup ID of a UE. If the terminal device does not support the CN grouping manner, the UE_ID-based grouping manner is used.

Optionally, a calculation method of the first indication information is shown in Formula 4.

$$\text{Formula 4:} \quad SubgroupID1 = \left( floor\left( \frac{UE\_ID}{N * N_s} \right) \mod G_{11} \right) + G_{12}$$

*SubgroupID1* represents a group number of the first terminal group. *floor* represents rounding down. *UE _ ID* represents a terminal identifier of the terminal device. N represents a quantity of paging frames in one paging cycle. $N_s$ represents a quantity of paging occasions in one paging frame. $G_{11}$ represents a quantity of terminal groups that are in the first terminal group and that use the UE_ID grouping manner on one paging occasion. $G_{12}$ represents a quantity of terminal groups that are in the first terminal group and that use the CN grouping manner on one paging occasion.

Optionally, UE_ID in Formula 4 may reuse a definition of UE_ID in a PEI grouping manner. To be specific, a value of UE_ID may be 5G-S-TMSI mod X. X is a real number. For example, in a case of extended discontinuous reception (extended discontinuous reception, eDRX), a value of X is 32768, and in another case, the value of X is 8192.

In addition, a 5G-S-TMSI of a truncated part is used for a UE ID of a terminal in an LP-WUS configuration. To be specific, a network side may allocate, to an LP-WUS, a relatively short UE ID that is unique in the AMF. For example, the 5G-S-TMSI appears in a form of 16+16+16 bits. To save energy and reduce complexity, the LP-WUS terminal may truncate only 16 or 32 bits of the 5G-S-TMSI for the UE ID of the terminal in the LP-WUS configuration. In actual application, a value of the TMSI may alternatively be set based on actual needs. This is not specifically limited herein.

Optionally, the first wake-up information is an LP-WUS. Correspondingly, the first terminal group may also be referred to as an LP-WUS group, *SubgroupID2* may also be referred to as LP-WUS-based grouping information, $G_{11}$ may be referred to as a quantity of LP-WUS groups that use a UE_ID grouping manner on one paging occasion, and $G_{12}$ may also be referred to as a quantity of LP-WUS groups that use a CN grouping manner on one paging occasion. In this case, this step may also be understood as that the network device wakes up the terminal device by using an LP-WUS at a subgroup granularity.

It may be understood that Formula 4 is merely an example, and in actual application, the first indication information may be calculated in another form, for example, rounding down is changed to rounding up or rounding off. This is not specifically limited herein.

Step 602: The network device sends a second wake-up signal to the terminal device.

The network device sends the second wake-up signal to the terminal device. Correspondingly, the terminal device receives, by using the second receiver, the second wake-up signal sent by the network device. The second wake-up signal indicates a second terminal group to receive a paging message.

The foregoing may also be understood as that the second wake-up signal indicates which terminals in specific groups need to monitor a paging message. If the second terminal group includes the terminal device (which is understood as that the second wake-up signal indicates that the terminal device needs to monitor the paging message or is understood as that the group number of the terminal group to which the terminal device belongs is in the second terminal group), the paging message is subsequently monitored.

Optionally, the second wake-up information is a PEI.

In addition, this application further provides a dual-layer grouping manner. To be specific, the second terminal group may be a subgroup of the first terminal group. Alternatively, it is understood as that a grouping effect of a PEI is added based on LP-WUS grouping. In this way, dual-layer grouping can be performed at a finer granularity, to reduce paging false alarms.

For example, an example of the dual-layer grouping is shown in FIG. 7. An LP-WUS group corresponds to the first terminal group, and a PEI group corresponds to the second terminal group. In the example in FIG. 7, there are three LP-WUS groups, and each LP-WUS group includes three subgroups (that is, PEI groups). It may be understood that a quantity of LP-WUS groups and a quantity of PEI groups in FIG. 7 are merely examples, and in actual application, the quantity of LP-WUS groups and the quantity of PEI groups may be greater or less. This is not specifically limited herein.

In this embodiment of this application, there are a plurality of cases for the second wake-up signal. Descriptions are separately provided below.

In a first case, the second wake-up signal includes second indication information.

In this case, the second terminal group includes a third terminal group. The second indication information in the second wake-up signal indicates the third terminal group to receive a paging message. A device in the third terminal group supports a UE_ID grouping manner.

Optionally, when the third terminal group includes the terminal device, the terminal device receives the paging message. Correspondingly, when the third terminal group does not include the terminal device, the terminal device does not need to receive the paging message.

Optionally, if the second terminal group is a subgroup of the first terminal group, the third terminal group in the second terminal group is a subgroup of the first terminal group.

In addition, in this application, the second indication information may be carried in a plurality of manners, and may be carried in DCI (for example, DCI format 2_7), or may be carried in newly defined information or other information. This is not specifically limited herein.

Optionally, the second indication information is in a first field in the DCI. The DCI further includes a second field. The second field indicates a fifth terminal group to receive a paging message. A device in the fifth terminal group supports a CN grouping manner or a UE _ID grouping manner. Further, the first field is a reserved field in the DCI, and the second field is a paging indication field (paging indication field).

Optionally, a calculation method of the second indication information is shown in Formula 5.

$$\text{Formula 5:} \quad SubgroupID2 = \left( floor\left( \frac{UE\_ID}{N * N_s * G_1} \right) \mod G_2 \right)$$

*SubgroupID2* represents a group number of the third terminal group. *floor* represents rounding down. *UE_ID* represents a terminal identifier of the terminal device. $N$ represents a quantity of paging frames in one paging cycle. $N_s$ represents a quantity of paging occasions in one paging frame. $G_1$ represents a quantity of groups of the first terminal group on one paging occasion. $G_2$ represents a quantity of groups of the third terminal group on one paging occasion.

Formula 5 may also be understood as dividing by a group number used at a first layer.

Optionally, $G_1$ may be broadcast to the terminal device through addition of a parameter to a broadcast message, or may be notified to the terminal device in a manner such as configuration or preconfiguration in the foregoing term explanation. $G_2$ may be broadcast to the terminal device by reusing a parameter (subgroupsNumForUEID) in the broadcast message. In addition, $G_1$ may also be referred to as a G_LP-WUS, and $G_2$ may also be referred to as a G PEI.

For example, $G_1$ is broadcast to the terminal device through addition of a parameter to the broadcast message. Specifically, $G_1$ may be indicated through addition of subgroupsNumPerPOofLPWUS to a system information block (system information block, SIB) 1.

It may be understood that Formula 5 is merely an example, and in actual application, the first indication information may be calculated in another form, for example, rounding down is changed to rounding up or rounding off, positions or a position of $G_1$ and/or $G_2$ are/is adjusted in Formula 5. This is not specifically limited herein.

In a second case, the second wake-up signal includes third indication information.

In this case, the second terminal group includes a fourth terminal group. The third indication information in the second wake-up signal indicates the fourth terminal group to receive a paging message. A device in the fourth terminal group supports a UE_ID grouping manner or a CN grouping manner.

The third indication information may be understood as an existing PEI (referred to as a first PEI) mechanism. In other words, the communication method provided in this application may be compatible with an existing PEI mechanism.

For example, the third indication information is a legacy PEI CN grouping indication bit (paging indication field).

In a third case, the second wake-up signal includes second indication information and third indication information.

In this case, the second terminal group includes a third terminal group and a fourth terminal group. The second indication information in the second wake-up signal indicates the third terminal group to receive a paging message. The third indication information in the second wake-up signal indicates the fourth terminal group to receive a paging message. A device in the third terminal group supports a UE_ID grouping manner. A device in the fourth terminal group supports a UE_ID grouping manner or a CN grouping manner.

In this step, the third indication information may be understood as an existing PEI (which may be referred to as a first PEI), and the second indication information may also be understood as a second PEI newly introduced in this application.

Further, to reduce unnecessary DCI overheads, both the second indication information and the third indication information may be in same DCI. Specifically, the DCI includes a first field and a second field, the second indication information is in the first field, the third indication information is in the second field, and the third indication information indicates the fourth terminal group to receive a paging message. A device in the fourth terminal group supports a CN grouping manner or supports a UE_ID grouping manner.

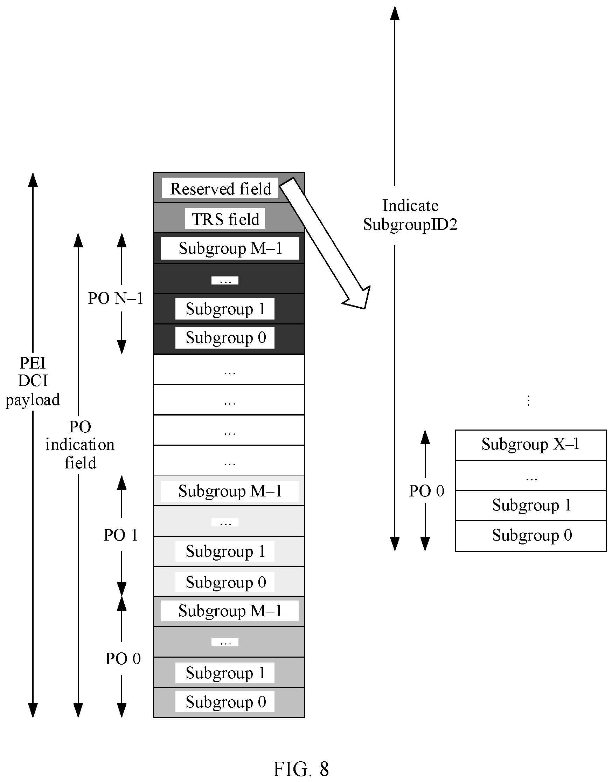

For example, the example in FIG. 4a is still used. The DCI may be shown in FIG. 8. The first field is a reserved field (that is, indicating SubgroupID2) in the DCI. The second field is a PO indication field in the DCI.

Optionally, when the fourth terminal group indicated by the third indication information may support the UE_ID grouping manner or the CN grouping manner, and the third terminal group indicated by the second indication information supports the UE_ID grouping manner, it is assumed that M=8 in PO 0 in the PO indication field in FIG. 8, the CN grouping manner is for Subgroup 0 and Subgroup 1, and the UE_ID grouping manner is for remaining six groups (that is, Subgroup 2 to Subgroup 7). In this case, it indicates that X=6 in SubgroupID2. In other words, SubgroupID2 is specific to the third terminal group that supports the UE_ID grouping manner.

It may be understood that the foregoing case of the second wake-up signal is merely an example, and in actual application, the second wake-up signal may be set based on actual needs. This is not specifically limited herein.

It can be learned that a newly designed second PEI grouping indication monitored by an LP-WUS does not affect monitoring of a legacy PEI by a legacy NR terminal, and compatibility of monitoring a PEI by an LP-WUS terminal and the legacy NR terminal is successfully implemented.

Step 603: The terminal device receives a paging message based on the second wake-up signal.

After receiving the second wake-up signal, the terminal device receives the paging message based on the second wake-up signal.

Specifically, the second wake-up signal indicates which terminals in specific groups need to monitor the paging message. If the second terminal group includes the terminal device (which is understood as that the second wake-up signal indicates that the terminal device needs to monitor the paging message or is understood as that a group number of a terminal group to which the terminal device having the first receiver belongs is in the second terminal group), the terminal device subsequently monitors or receives the paging message.

Corresponding to the plurality of cases for the second wake-up signal, this step corresponds to a plurality of cases. Descriptions are separately provided below.

In the first case, the second wake-up signal includes the second indication information.

In this case, the second terminal group includes the third terminal group. The second indication information in the second wake-up signal indicates the third terminal group to receive the paging message. A device in the third terminal group supports a UE_ID grouping manner.

In this case, that the terminal device receives the paging message based on the second wake-up signal includes: The terminal device receives the paging message based on the second indication information. To be specific, if the group that the terminal device is in belongs to the third terminal group, the terminal device monitors the paging message.

In the second case, the second wake-up signal includes the third indication information.

In this case, the second terminal group includes the fourth terminal group. The third indication information in the second wake-up signal indicates the fourth terminal group to receive the paging message. A device in the fourth terminal group supports a UE_ID grouping manner or a CN grouping manner.

In this case, that the terminal device receives the paging message based on the second wake-up signal includes: The terminal device receives the paging message based on the third indication information. To be specific, if the group that the terminal device is in belongs to the fourth terminal group, the terminal device monitors the paging message.

In the third case, the second wake-up signal includes the second indication information and the third indication information.

In this case, the second terminal group includes the third terminal group and the fourth terminal group. The second indication information in the second wake-up signal indicates the third terminal group to receive the paging message. The third indication information in the second wake-up signal indicates the fourth terminal group to receive the paging message. A device in the third terminal group supports a UE_ID grouping manner. A device in the fourth terminal group supports a UE_ID grouping manner or a CN grouping manner.

In this case, there are a plurality of cases in which the terminal device receives the paging message based on the second wake-up signal. Descriptions are separately provided below.

1. A priority of CN grouping is higher than a priority of UE_ID grouping.

This case may also be understood as follows: If a device in the fourth terminal group supports the CN grouping, and a terminal group to which the terminal device belongs belongs to the fourth terminal group, that the terminal device receives the paging message based on the second wake-up signal includes: The terminal device receives the paging message based on the third indication information. To be specific, if the group that the terminal device is in belongs to the fourth terminal group, the terminal device monitors the paging message.

For example, the foregoing example in FIG. 8 is still used. In the case in which the CN grouping manner is for Subgroup 0 and Subgroup 1 in PO 0 in the PO indication field in FIG. 8, the terminal device monitors Subgroup 0 and Subgroup 1 in the PO indication field.

2. When the terminal in the LP-WUS configuration monitors the PEI, it is specified that the terminal monitors a second PEI group identifier that is based on a UE ID dual-layer grouping formula (namely, a case in which the second wake-up information includes the second indication information).

This case may also be understood as follows: That the terminal device receives the paging message based on the second wake-up signal includes: The terminal device receives the paging message based on the second indication information. To be specific, if the group that the terminal device is in belongs to the third terminal group, the terminal device monitors the paging message.

For example, the foregoing example in which X=6 in FIG. 8 is still used. In this case, the terminal device monitors Subgroup 0 to Subgroup 5 in SubgroupID2.

3. Monitoring is performed by using both a CN group identifier and a second PEI group identifier that is based on a UE ID dual-layer grouping formula.

This case may also be understood as follows: If the LP-WUS terminal is configured with both CN grouping and UE ID-based dual-layer grouping (that is, a manner in which both the first indication information and the second indication information are used), the LP-WUS terminal monitors both the third indication information and the second indication information, and when both the two indication information is '1', the terminal device monitors the paging message.

Optionally, after determining to monitor the paging message, the terminal device demodulates a PDCCH and a paging-related PDSCH that are on a PO, and performs a processing procedure such as random access.

According to the foregoing technical solution, the terminal device first receives the first wake-up signal by using the first receiver having relatively low operating power, and then receives the second wake-up signal by using the second receiver having relatively high operating power, to monitor paging based on the second wake-up signal. Because the second terminal group indicated by the second wake-up signal and the first terminal group indicated by the first wake-up signal include the terminal device, the first terminal group indicates to wake up a terminal, and then a second paging group indicates to monitor the paging message, so as to monitor the paging message in the dual-layer grouping manner. In this way, a communication method applicable to a scenario in which both a low-power wake-up signal and a paging early indication are used is provided. In addition, a to-be-paged terminal can be indicated at a finer granularity, to reduce a probability that the terminal is paged. In addition, in comparison with a case in which the terminal device directly monitors the paging message, the dual-layer grouping manner at a finer granularity can reduce an energy loss caused by unnecessary monitoring paging, to further reduce paging false alarms.

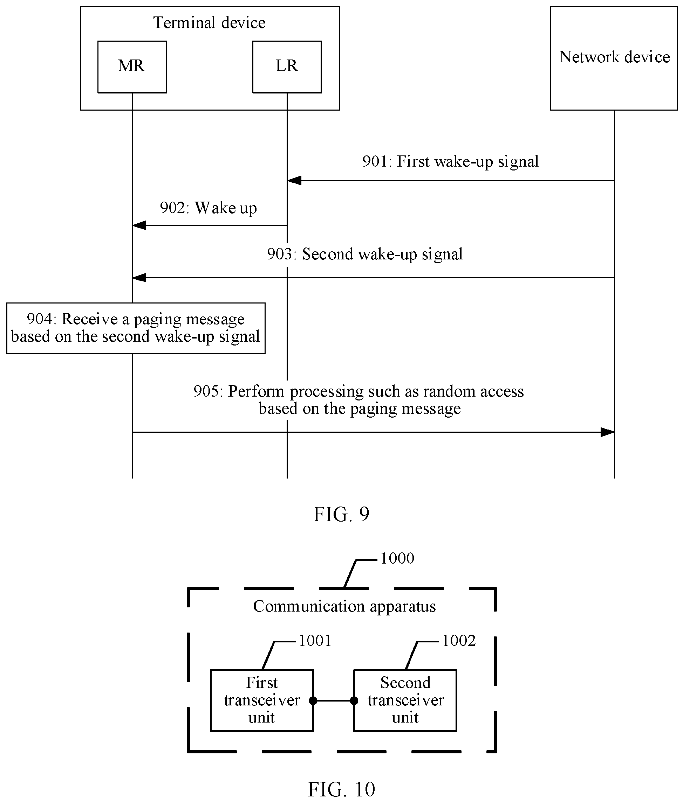

In addition, the embodiment shown in FIG. 6 may also be understood as a schematic flowchart shown in FIG. 9. FIG. 9 includes step 901 to step 905. The following describes step 901 to step 905 in detail. Step 901 to step 905 may be performed by a terminal device or a network device, or may be performed by some components (for example, a processor, a chip, or a chip system) in the terminal device or the network device, or may be implemented by a logical module or software that can implement all or some functions of the terminal device. The following uses an example in which the terminal device or the network device performs the steps for description. Processing performed by a single execution entity in step 901 to step 905 may alternatively be performed by a plurality of execution entities. These execution entities may be logically and/or physically separated. For example, processing performed by the network device may be performed by at least one of a CU, a DU, and an RU.

Step 901: The network device sends a first wake-up signal to the terminal device.

The network device sends the first wake-up signal to the terminal device. Correspondingly, a first receiver of the terminal device receives the first wake-up signal from the network device. The first indication information indicates that the first terminal group is woken up. Alternatively, the first indication information indicates whether the first receiver wakes up a second receiver.

Optionally, the first wake-up signal is configured to be received by the first receiver.

Step 902: The first receiver of the terminal device wakes up the second receiver.

When the first indication information indicates that the terminal device to which the first receiver belongs is woken up, or the first indication information indicates that the first receiver wakes up the second receiver, the first receiver of the terminal device wakes up the second receiver.

The foregoing wake-up process may be understood as function triggering. For example, the second receiver is woken up, and the terminal device subsequently uses the second receiver to send and receive data.

Step 903: The network device sends a second wake-up signal to the terminal device.

The network device sends the second wake-up signal to the terminal device. Correspondingly, the second receiver of the terminal device receives the second wake-up signal from the network device.

Optionally, the second wake-up signal is configured to be received by the second receiver.

For detailed descriptions in this step, refer to step 602 in the foregoing embodiment shown in FIG. 6. Details are not described herein again.

Step 904: The terminal device receives a paging message based on the second wake-up signal.

For detailed descriptions in this step, refer to step 603 in the foregoing embodiment shown in FIG. 6. Details are not described herein again.

Step 905: The terminal device performs processing such as random access based on the paging message.

After monitoring and obtaining the paging message, the terminal device may perform a processing procedure such as random access.

According to the technical solution in FIG. 9, a second PEI grouping indication formula (determined by both LP-WUS grouping information and PEI grouping information) applicable to an LP-WUS terminal is designed, so that dual-layer grouping in which both an LP-WUS and a PEI are used is implemented to further reduce paging false alarms, and effectively reduce an energy loss caused by unnecessary monitoring paging. In addition, a second PEI grouping information indication bit is newly designed to have a reserved bit occupying a PEI DCI payload, a manner of using both a second PEI grouping indication and an existing PEI group is provided, and a priority specifically used for monitoring the second PEI grouping indication and a legacy PEI grouping indication is specified. The newly designed second PEI grouping indication monitored by the LP-WUS does not affect monitoring of a legacy PEI by a legacy NR terminal, and compatibility of monitoring a PEI by the LP-WUS terminal and the legacy NR terminal is successfully implemented.

The foregoing describes this application from a perspective of the method. The following describes a communication apparatus provided in this application.

Refer to FIG. 10. An embodiment of this application provides a communication apparatus 1000. The communication apparatus 1000 can implement a function of the terminal device in the foregoing method embodiments, and therefore can also implement beneficial effects of the foregoing method embodiments. In this embodiment of this application, the communication apparatus 1000 may be a terminal device, or may be an integrated circuit, an element, or the like inside the terminal device, for example, a chip. An example in which the communication apparatus 1000 is a terminal device is used for description in the following embodiment.

The communication apparatus 1000 includes a first transceiver unit 1001 and a second transceiver unit 1002. The first transceiver unit 1001 receives a first wake-up signal, where the first wake-up signal includes first indication information, the first indication information indicates that a first terminal group is woken up, and the first terminal group includes the terminal device. The second transceiver unit 1002 receives a second wake-up signal, where the second wake-up signal indicates a second terminal group to receive a paging message, and the second terminal group includes the terminal device. The second transceiver unit 1002 then receives a paging message based on the second wake-up signal.

Optionally, the apparatus 1000 may further include a processing unit. The processing unit assists the second transceiver unit 1002 in receiving the paging message based on the second wake-up signal. Alternatively, it is understood as that the processing unit may assist the first transceiver unit 1001 and the second transceiver unit 1002 in determining a group identifier and the like.

It is clear that one processing unit may be configured for a plurality of transceiver units, or one processing unit may be configured for one transceiver unit. A quantity of processing units is not limited.

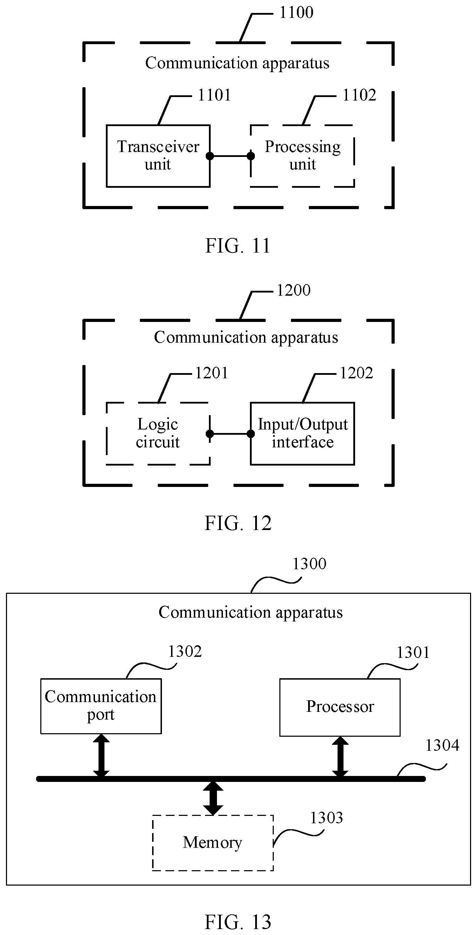

Refer to FIG. 11. An embodiment of this application provides a communication apparatus 1100. The communication apparatus 1100 can implement a function of the network device in the foregoing method embodiments, and therefore can also implement beneficial effects of the foregoing method embodiments. In this embodiment of this application, the communication apparatus 1100 may be a network device, or may be an integrated circuit, an element, or the like in the network device, for example, a chip. An example in which the communication apparatus 1000 is a network device is used for description in the following embodiment.

The communication apparatus 1100 includes a transceiver unit 1101. The transceiver unit 1101 sends a first wake-up signal, where the first wake-up signal is configured to be received by a first receiver, the first wake-up signal includes first indication information, the first indication information indicates that a first terminal group is woken up, and the first terminal group includes a terminal device. The transceiver unit 1101 sends a second wake-up signal, where the second wake-up signal is configured to be received by a second receiver, operating power of the first receiver is less than operating power of the second receiver, the second wake-up signal indicates a second terminal group to receive a paging message, the second terminal group includes the terminal device, and the terminal device includes the first receiver and the second receiver.

Optionally, in actual application, the communication apparatus 1100 may further include a processing unit 1102, configured to assist the transceiver unit 1101 in sending the first wake-up signal and the second wake-up signal.

FIG. 12 is another diagram of a structure of a communication apparatus 1200 according to this application. The communication apparatus 1200 includes at least an input/output interface 1202. The communication apparatus 1200 may be a chip or an integrated circuit.

Optionally, the communication apparatus further includes a logic circuit 1201.

The first transceiver unit 1001 and the second transceiver unit 1002 shown in FIG. 10 and the transceiver unit 1101 shown in FIG. 11 may be communication interfaces. The communication interface may be the input/output interface 1202 in FIG. 12. The input/output interface 1202 may include an input interface and an output interface. Alternatively, the communication interface may be a transceiver circuit, and the transceiver circuit may include an input interface circuit and an output interface circuit.

Optionally, when the communication apparatus 1200 is the terminal device (or a component in the device) in the foregoing embodiments, the input/output interface 1002 may include at least two input/output interfaces. For example, the input/output interface 1002 includes a first input/output interface and a second input/output interface. The first input/output interface receives a first wake-up signal, where the first wake-up signal includes first indication information, the first indication information indicates that a first terminal group is woken up, and the first terminal group includes the terminal device. The second input/output interface receives a second wake-up signal, where the second wake-up signal indicates a second terminal group to receive a paging message, and the second terminal group includes the terminal device. The second input/output interface then receives a paging message based on the second wake-up signal.

Optionally, when the communication apparatus 1200 is the network device (or a component in the device) in the foregoing embodiments, the input/output interface 1202 sends a first wake-up signal, where the first wake-up signal includes first indication information, operating power of a first receiver is less than operating power of a second receiver, the first indication information indicates that a first terminal group is woken up, the second wake-up signal indicates a second terminal group to receive a paging message, the first terminal group includes a terminal device, and the second terminal group includes the terminal device. The input/output interface 1202 sends a second wake-up signal.

The logic circuit 1201 and the input/output interface 1202 may alternatively perform another step performed by the network device in any embodiment, and achieve corresponding beneficial effects. Details are not described herein again.

FIG. 13 shows a communication apparatus 1300 used in the foregoing embodiments according to an embodiment of this application. The communication apparatus 1300 may be specifically a communication apparatus used as the terminal device in the foregoing embodiments. In an example shown in FIG. 13, the terminal device is implemented by a terminal device (or a component in the terminal device).

In a diagram of a possible logical structure of the communication apparatus 1300, the communication apparatus 1300 may include but is not limited to at least one processor 1301 and a communication port 1302.

Further, optionally, the apparatus may include at least one of a memory 1303 and a bus 1304. In this embodiment of this application, the at least one processor 1301 is configured to control and process an action of the communication apparatus 1300.

In addition, the communication port 1302 may include a first communication port and a second communication port. The first communication port corresponds to the first receiver in the foregoing embodiments, and the second communication port corresponds to the second receiver in the foregoing embodiments.

The processor 1301 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 1300 shown in FIG. 13 may be specifically configured to implement steps implemented by the terminal device in the foregoing method embodiments, and achieve the technical effects corresponding to the terminal device. For a specific implementation of the communication apparatus shown in FIG. 13, refer to the descriptions in the foregoing method embodiments. Details are not described herein again.

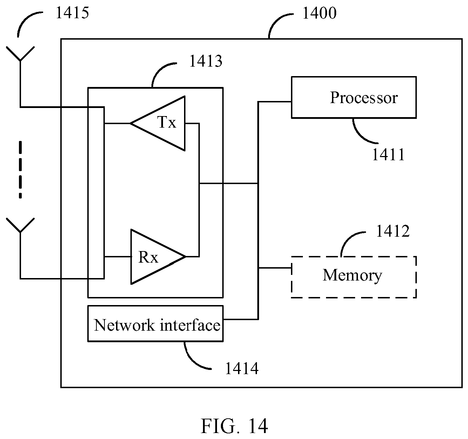

FIG. 14 is a diagram of a structure of a communication apparatus 1400 used in the foregoing embodiments according to an embodiment of this application. The communication apparatus 1400 may be specifically a communication apparatus used as the network device in the foregoing embodiments. In an example shown in FIG. 14, the network device is implemented as a network device (or a component in the network device). For a structure of the communication apparatus, refer to the structure shown in FIG. 14.

The communication apparatus 1400 includes at least one processor 1411 and at least one network interface 1414. Further, optionally, the communication apparatus further includes at least one memory 1412, at least one transceiver 1413, and one or more antennas 1415. The processor 1411, the memory 1412, the transceiver 1413, and the network interface 1414 are connected to each other, for example, through a bus. In this embodiment of this application, the connection may include various types of interfaces, transmission lines, buses, or the like. This is not limited in this embodiment. The antenna 1415 is connected to the transceiver 1413. The network interface 1414 is configured to cause the communication apparatus to communicate with another communication device through a communication link. For example, the network interface 1414 may include a network interface between the communication apparatus and a core network device, for example, an S1 interface. The network interface may include a network interface between the communication apparatus and another communication apparatus (for example, another network device or core network device), for example, an X2 or Xn interface.

The processor 1411 is mainly configured to: process a communication protocol and communication data, control the entire communication apparatus, execute a software program, and process data of the software program, for example, configured to support the communication apparatus in performing an action described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1411 in FIG. 14. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1412 may exist independently, and is connected to the processor 1411. Optionally, the memory 1412 may be integrated with the processor 1411, for example, integrated in a chip. The memory 1412 can store program code for executing the technical solutions in embodiments of this application, and the processor 1411 controls the execution. Various types of executed computer program code may also be considered as drivers of the processor 1411.

FIG. 14 merely shows one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1413 may be configured to support receiving or sending of a radio frequency signal between the communication apparatus and a terminal. The transceiver 1413 may be connected to the antenna 1415. The transceiver 1413 includes a transmitter Tx and a receiver Rx. Specifically, the one or more antennas 1415 may receive a radio frequency signal. The receiver Rx of the transceiver 1413 is configured to: receive the radio frequency signal from the antenna, convert the radio frequency signal into a digital baseband signal or a digital intermediate frequency signal, and provide the digital baseband signal or the digital intermediate frequency signal to the processor 1411, so that the processor 1411 performs further processing, for example, demodulation and decoding, on the digital baseband signal or the digital intermediate frequency signal. In addition, the transmitter Tx of the transceiver 1413 is further configured to: receive a modulated digital baseband signal or modulated digital intermediate frequency signal from the processor 1411, convert the modulated digital baseband signal or the modulated digital intermediate frequency signal into a radio frequency signal, and send the radio frequency signal through the one or more antennas 1415. Specifically, the receiver Rx may selectively perform one-stage or multi-stage down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-stage or multi-stage up frequency mixing and digital-to-analog conversion on the modulated digital baseband signal or the modulated digital intermediate frequency signal, to obtain the radio frequency signal. A sequence of the up frequency mixing and the digital-to-analog conversion is adjustable. The digital baseband signal and the digital intermediate frequency signal may be collectively referred to as a digital signal.

The transceiver 1413 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes a receiving unit and a sending unit. The receiving unit may also be referred to as a receiver, an input interface, a receiver circuit, or the like. The sending unit may be referred to as a transmitter, a transmitter machine, a transmitter circuit, or the like.

It should be noted that the communication apparatus 1400 shown in FIG. 14 may be specifically configured to implement steps implemented by the network device in the foregoing method embodiments, and achieve the technical effects corresponding to the network device. For a specific implementation of the communication apparatus 1400 shown in FIG. 14, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) stored in one or more computers. When the computer program product is executed by a processor, the processor performs the method in the possible implementations of the terminal device.

An embodiment of this application further provides a computer program product stored in one or more computers. When the computer program product is executed by a processor, the processor performs the method in the possible implementations of the network device.

An embodiment of this application further provides a chip system. The chip system includes at least one processor, configured to support a communication apparatus in implementing functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. The communication system includes the terminal device and the network device in any one of the foregoing embodiments.

In the several embodiments provided in this application, it should be understood that the disclosed system, apparatus, and method may be implemented in other manners. For example, the apparatus embodiments described above are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented via some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A communication method, wherein the method is applied to a terminal device, the terminal device comprises a first receiver and a second receiver, operating power of the first receiver is less than operating power of the second receiver, and the method comprises:

   receiving a first wake-up signal by using the first receiver, wherein the first wake-up signal comprises first indication information, the first indication information indicates that a first terminal group is woken up, and the first terminal group comprises the terminal device;
   receiving a second wake-up signal by using the second receiver, wherein the second wake-up signal indicates a second terminal group to receive the paging message, and the second terminal group comprises the terminal device; and
   receiving the paging message based on the second wake-up signal.

2. The method according to claim 1, wherein the second terminal group is a subgroup of the first terminal group.

3. The method according to claim 1 or 2, wherein the second terminal group comprises a third terminal group, the second wake-up signal comprises second indication information, the second indication information indicates the third terminal group to receive a paging message, the third terminal group in the second terminal group is a subgroup of the first terminal group, a device in the third terminal device group supports a terminal identifier grouping manner, and the third terminal group in the second terminal group comprises the terminal device.

4. The method according to any one of claims 1 to 3, wherein the second terminal group comprises a fourth terminal group, the second wake-up signal comprises third indication information, the third indication information indicates the fourth terminal group to receive a paging message, a device in the fourth terminal device group supports a core network grouping manner or a terminal identifier grouping manner, and the fourth terminal group in the second terminal group comprises the terminal device.

5. The method according to claim 3, wherein the second indication information is in a first field in downlink control information DCI, the DCI further comprises a second field, the second field indicates a fifth terminal group to receive a paging message, and a device in the fifth terminal device group supports a core network grouping manner or a terminal identifier grouping manner.

6. The method according to claim 3 or 5, wherein a calculation formula of the second indication information is as follows:

$$SubgroupID2 = \left( floor\left( \frac{UE\_ID}{N * N_s * G_1} \right) \bmod G_2 \right),$$

wherein
$SubgroupID2$ represents a group number of the third terminal group, $floor$ represents rounding down, $UE\_ID$ represents a terminal identifier of the terminal device, $N$ represents a quantity of paging frames in one paging cycle, $N_s$ represents a quantity of paging occasions in one paging frame, $G_1$ represents a quantity of groups of the first terminal group on one paging occasion, and $G_2$ represents a quantity of groups of the third terminal group on one paging occasion.

7. The method according to any one of claims 3, 5, and 6, wherein the first indication information is a low-power wake-up signal LP-WUS, and the second indication information is a paging early indication PEI.

8. A communication method, wherein the method is applied to a network device, and the method comprises:

sending a first wake-up signal, wherein the first wake-up signal is configured to be received by a first receiver, the first wake-up signal comprises first indication information, the first indication information indicates that a first terminal group is woken up, and the first terminal group comprises a terminal device; and
sending a second wake-up signal, wherein the second wake-up signal is configured to be received by a second receiver, operating power of the first receiver is less than operating power of the second receiver, the second wake-up signal indicates a second terminal group to receive the paging message, the second terminal group comprises the terminal device, and the terminal device comprises the first receiver and the second receiver.

9. The method according to claim 8, wherein the second terminal group is a subgroup of the first terminal group.

10. The method according to claim 8 or 9, wherein the second terminal group comprises a third terminal group, the second wake-up signal comprises second indication information, the second indication information indicates the third terminal group to receive a paging message, the third terminal group in the second terminal group is a subgroup of the first terminal group, a device in the third terminal device group supports a terminal identifier grouping manner, and the third terminal group in the second terminal group comprises the terminal device.

11. The method according to any one of claims 8 to 10, wherein the second terminal group comprises a fourth terminal group, the second wake-up signal comprises third indication information, the third indication information indicates the fourth terminal group to receive a paging message, a device in the fourth terminal device group supports a core network grouping manner or a terminal identifier grouping manner, and the fourth terminal group in the second terminal group comprises the terminal device.

12. The method according to claim 10, wherein the second indication information is in a first field in downlink control information DCI, the DCI further comprises a second field, the second field indicates a fifth terminal group to receive a paging message, and a device in the fifth terminal device group supports a core network grouping manner or a terminal identifier grouping manner.

13. The method according to claim 10 or 12, wherein a calculation formula of the second indication information is as follows:

$$SubgroupID2 = \left( floor\left( \frac{UE\_ID}{N * N_s * G_1} \right) \bmod G_2 \right),$$

wherein

$SubgroupID2$ represents a group number of the third terminal group, $floor$ represents rounding down, $UE\_ID$ represents a terminal identifier of the terminal device, $N$ represents a quantity of paging frames in one paging cycle, $N_s$ represents a quantity of paging occasions in one paging frame, $G_1$ represents a quantity of groups of the first terminal group on one paging occasion, and $G_2$ represents a quantity of groups of the third terminal group on one paging occasion.

14. The method according to any one of claims 10, 12, and 13, wherein the first indication information is a low-power wake-up signal LP-WUS, and the second indication information is a paging early indication PEI.

15. A communication apparatus, comprising a module configured to perform the method according to any one of claims 1 to 14.

16. A communication apparatus, comprising at least one processor, wherein the at least one processor is configured to perform the method according to any one of claims 1 to 14.

17. A computer-readable storage medium, wherein the medium stores instructions, and when the instructions are executed by a computer, the method according to any one of claims 1 to 14 is implemented.

18. A computer program product, comprising instructions, wherein when the instructions are run on a computer, the computer is caused to perform the method according to any one of claims 1 to 14.

19. A communication system, wherein the communication system comprises a terminal device and a network device, wherein the terminal device is configured to perform the method according to any one of claims 1 to 7, and the network device is configured to perform the method according to any one of claims 8 to 14.

FIG. 1a

FIG. 1b

MME/S-GW                                    MME/S-GW

EPC

S1-U          S1-U              S1-U            S1-U

en-gNB          S1      S1      S1      S1      en-gNB

E-UTRAN

X2-U

X2                                          X2

X2

eNB                    eNB

FIG. 1c

Short-range scenario

First terminal
device

Second terminal
device

Third terminal
device

FIG. 1d

FIG. 2

FIG. 3a

| Terminal device | | Network device |
|---|---|---|

**1: Determine a total quantity of subgroups that are determined based on UE_ID**

**2: Broadcast, via a system message, the total quantity of subgroups determined based on UE_ID**

**3: A UE determines a subgroup to which the UE belongs**

**4: Paging message for the UE**

**5: PEI**

FIG. 3b

| Reserved field |
|---|
| TRS field |
| Subgroup M–1 |
| ... |
| Subgroup 1 |
| Subgroup 0 |
| ... |
| ... |
| ... |
| ... |
| Subgroup M–1 |
| ... |
| Subgroup 1 |
| Subgroup 0 |
| Subgroup M–1 |
| ... |
| Subgroup 1 |
| Subgroup 0 |

PEI DCI payload

PO indication field

PO N–1

PO 1

PO 0

FIG. 4a

UE subgroup 1: UE 1 and UE 4    UE subgroup 1: UE x and UE y
UE subgroup 2: UE 2 and UE 3    UE subgroup 2: UE m and UE n
...                                              ...
UE subgroup M: UE i and UE j    UE subgroup M: UE p and UE q

PEI          PO                    PO

| 1 | 0 | ... | 1 | 0 | 1 | ... | 1 | ... |

Subgroup         Subgroup
indication       indication
M subgroups      M subgroups

FIG. 4b

Primary link

Wake up

Receive an LP-WUS

Secondary link

FIG. 5

Terminal device | Network device

601: First wake-up signal

602: Second wake-up signal

603: Receive a paging message based on the second wake-up signal

FIG. 6

LP-WUS group

LP-WUS group 0 | LP-WUS group 1 | LP-WUS group 2

PEI group | PEI group | PEI group | PEI group | PEI group | PEI group | PEI group | PEI group | PEI group

FIG. 7

FIG. 8

Terminal device

MR

LR

Network device

901: First wake-up signal

902: Wake up

903: Second wake-up signal

904: Receive a paging message
based on the second wake-up signal

905: Perform processing such as random access
based on the paging message

FIG. 9

1000

Communication apparatus

1001

First
transceiver
unit

1002

Second
transceiver
unit

FIG. 10

1100

Communication apparatus

1101

Transceiver unit

1102

Processing unit

FIG. 11

1200

Communication apparatus

1201

Logic circuit

1202

Input/Output interface

FIG. 12

1300

Communication apparatus

1302

Communication port

1301

Processor

1304

1303

Memory

FIG. 13

FIG. 14

## INTERNATIONAL SEARCH REPORT

| International application No. |
| --- |
| **PCT/CN2024/111601** |

| A. | CLASSIFICATION OF SUBJECT MATTER |
| --- | --- |

H04W68/02(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNKI, VCN, DWPI, ENTXT, 3GPP: 唤醒信号, 低功耗唤醒信号, 唤醒, 寻呼提前指示, 寻呼早期指示, 终端组, 分组, 子组, 寻呼, 功率, 终端标识, 数量, 个数, 核心网, 分组方式, 寻呼帧, 寻呼时机, WUS, LP-WUS, wake up, PEI, group+, paging, ID, number, PF, PO

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2022151405 A1 (HUAWEI TECHNOLOGIES CO., LTD.) 21 July 2022 (2022-07-21) description, page 14, line 2 to page 17, line 35, page 35, line 2 to page 36, line 23, and page 42, line 4 to page 43, line 3 | 1-5, 7-12, 14-19 |
| Y | CN 115701183 A (SPREADTRUM SEMICONDUCTOR (NANJING) CO., LTD.) 07 February 2023 (2023-02-07) description, paragraphs 0074-0110 | 1-5, 7-12, 14-19 |
| A | WO 2023098845 A1 (SPREADTRUM COMMUNICATIONS (SHANGHAI) CO., LTD.) 08 June 2023 (2023-06-08) entire document | 1-19 |
| A | CN 114828167 A (DATANG MOBILE COMMUNICATIONS EQUIPMENT CO., LTD.) 29 July 2022 (2022-07-29) entire document | 1-19 |
| A | CN 115942336 A (SPREADTRUM SEMICONDUCTOR (NANJING) CO., LTD.) 07 April 2023 (2023-04-07) entire document | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 October 2024** | **06 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/111601**

| Patent document cited in search report | | | Publication date (day/month/year) | Patent family member(s) | | | Publication date (day/month/year) |
|---|---|---|---|---|---|---|---|
| WO | 2022151405 | A1 | 21 July 2022 | CN | 116114327 | A | 12 May 2023 |
| CN | 115701183 | A | 07 February 2023 | WO | 2023284839 | A1 | 19 January 2023 |
| WO | 2023098845 | A1 | 08 June 2023 | EP | 4443984 | A1 | 09 October 2024 |
| | | | | CN | 116233975 | A | 06 June 2023 |
| CN | 114828167 | A | 29 July 2022 | WO | 2022152038 | A1 | 21 July 2022 |
| | | | | EP | 4280705 | A1 | 22 November 2023 |
| | | | | CN | 117202324 | A | 08 December 2023 |
| | | | | VN | 99822 | A | 25 December 2023 |
| CN | 115942336 | A | 07 April 2023 | WO | 2023020482 | A1 | 23 February 2023 |

Form PCT/ISA/210 (patent family annex) (July 2022)

# EP 4 761 400 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311129388